# EUROPEAN PATENT SPECIFICATION

(11) **EP 2 508 820 B1**
(45) Date of publication and mention of the grant of the patent: **13.09.2017**
(21) Application number: 12158690.3
(22) Date of filing: 09.03.2012
(51) Int. Cl.: F25B 13/00, F25B 41/06

(54) **Air conditioner**
Klimaanlage
Climatiseur

(30) Priority: 07.04.2011 KR 20110032179
(43) Date of publication of application: 10.10.2012
(73) Proprietor: LG Electronics Inc., Youngdungpo-gu Seoul 150-721 (KR)
(72) Inventor: Kim, Juhyok, 153-802 Seoul (KR); Lee, Hanchoon, 153-802 Seoul (KR); Kim, Hongseong, 153-802 Seoul (KR); Ha, Samchul, 153-802 Seoul (KR); Lee, Sangyeul, 153-802 Seoul (KR)
(74) Representative: Vossius & Partner Patentanwälte Rechtsanwälte mbB

(56) References cited:
- EP-A2- 0 779 482
- EP-A2- 1 686 323
- EP-A2- 1 972 871
- WO-A1-2010/082483
- JP-A- 8 200 890
- US-A- 2 969 655

## Description

The present invention relates to an air conditioner.

Air conditioners are known. However, they suffer from various disadvantages. Document JP-A-08200890 discloses an air conditioner according to the preamble of claim 1.

The present invention provides an air conditioner according to claim 1 and an operating method according to claim 12. Preferred embodiments are specified in the dependent claims. Embodiments will be described in detail with reference to the following drawings in which like reference numerals refer to like elements, and wherein:
Fig. 1 is a schematic diagram of an air conditioner according to an embodiment not belonging to the invention;
Fig. 2 is a perspective view of the expander of Fig. 1;
Fig. 3 is a side view of a portion of the expander of Fig. 2;
Fig. 4 is a graph illustrating a difference in flow rate of a refrigerant in cooling and heating operations; and
Fig. 5 is a view illustrating a portion of an expander according to the invention.

Hereinafter, embodiments will be described with reference to the accompanying drawings. The concepts may, however, be embodied in many different forms and should not be construed as being limited to the embodiments set forth herein; rather, alternate embodiments included in other retrogressive inventions or falling within the scope of the claims may fully convey the concepts to those skilled in the art.

Generally, air conditioners are home appliances that maintain indoor air at a proper state according to a use and purpose thereof. For example, such an air conditioner may cool indoor air in summer and warm the indoor air in winter. Further, the air conditioner may control a humidity of the indoor air and purify the indoor air by removing impurities therefrom. As products for life's convenience, such as air conditioners, are gradually expanded in use, consumers require products having high energy efficiency, superior performance, and greater convenience in use.

The air conditioner may perform a cooling or heating operation for an indoor space according to an operation direction of a refrigeration cycle. That is, a flow direction of a refrigerant flowing in the refrigeration cycle may vary according to a specific operation condition (cooling or heating requirement). Further, the cooling or heating operation may be selectively performed using one system device.

In more detail, the refrigeration cycle may be formed by sequentially connecting to each other a compressor, an outdoor heat-exchanger, an expander, and an indoor heat-exchanger. When a cooling operation is performed, the refrigerant passing through the compressor may be condensed in the outdoor heat-exchanger and expanded (decompressed) while passing through the expander. Then, the refrigerant may be evaporated in the indoor heat-exchanger and introduced again into the compressor. On the other hand, when a heating operation is performed, the refrigerant passing through the compressor may be condensed in the indoor heat-exchanger and passes through the expander. Then, the refrigerant may be evaporated in the outdoor heat-exchanger and introduced again into the compressor.

The refrigerant passing through the outdoor heat-exchanger or the indoor heat-exchanger may be additionally condensed in a liquid state to reach an overcooled state. As the overcooled degree of the refrigerant increases, a flow rate of the refrigerant passing through the expander may increase. Thus, the flow rate of the refrigerant may increase to improve the cooling or heating performance.

An expander is a device that controls the flow rate of the refrigerant and a pressure of the system. Thus, the expander may act as an important element for determining the cooling or heating performance. Typically, the expander may have a constant sectional area (constant inner diameter).

According to pressure and temperature (outdoor temperature and indoor temperature) of the refrigeration cycle, an overcooled degree of the refrigerant during the heating operation may be higher than that of the refrigerant during the cooling operation. Thus, a flow rate of the refrigerant during the heating operation may be greater than that of the refrigerant during the cooling operation.

However, when a flow rate of the refrigerant during the heating operation is less than that of the refrigerant during the cooling operation, it may be difficult to obtain a flow rate of the refrigerant for the cooling or heating operation required in the refrigeration system. For example, the refrigerant may have a flow rate greater than that required during the heating operation, and also, the refrigerant may have a flow rate less than that required during the cooling operation.

As a result, refrigeration performance during the cooling operation may be insufficient, and the refrigerant performance during the heating operation may be excessive.

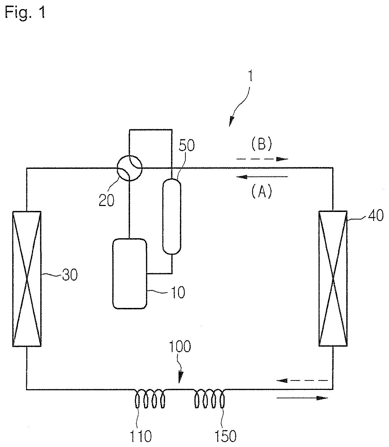

Fig. 1 is a schematic diagram of an air conditioner according to an embodiment. Referring to Fig. 1, the air conditioner 1 may include a compressor 10 that compresses a refrigerant to a high-temperature and high-pressure, an outdoor heat-exchanger 30 disposed in an outdoor space that heat-exchanges the refrigerant with outdoor air, an indoor heat-exchanger 40 disposed in an indoor space that heat-exchanges the refrigerant with indoor air, and an expander 100 that decompresses the refrigerant condensed in the outdoor heat-exchanger 30 or the indoor heat-exchanger 40 to a predetermined pressure.

The air conditioner 1 may further include a flow converter 20 that guides the refrigerant discharged from the compressor 10 toward the outdoor heat-exchanger 30 or the indoor heat-exchanger 40. The flow converter 20 may include a four-way valve that controls a flow direction of the refrigerant.

When a cooling operation is performed, the refrigerant discharged from the compressor 10 may pass through the flow converter 20 to flow toward the outdoor heat-exchanger 30. On the other hand, when a heating operation is performed, the refrigerant discharged from the compressor 10 may pass through the flow converter 20 to flow toward the indoor heat-exchanger 40.

A gas/liquid separator 50 that filters a liquid refrigerant from an evaporated refrigerant may be disposed at an inlet side of the compressor 10. A gaseous refrigerant passing through the gas/liquid separator 50 may be introduced into the compressor 10.

The expander 100 may include a first capillary tube 110 disposed at an outlet or inlet side of the outdoor heat-exchanger 30 and a second capillary tube 150 disposed at an outlet or inlet side of the indoor heat-exchanger 40. The first capillary tube 110 may be referred to as a "first decompression portion", and the second capillary tube 150 may be referred to as a "second decompression portion". The term "outlet side" and "inlet side" may be understood as terms defined on the basis of the flow direction of the refrigerant.

The first and second capillary tubes 110 and 150 may be connected to each other in series. Also, the first and second capillary tubes 110 and 150 may have diameters different from each other. The refrigerant may be phase-converted from an overcooled liquid state into a two-phase state (i.e., a mixed state of liquid and gaseous refrigerants) while passing through the expander 100.

A flow direction of the refrigerant according to an operation mode will be described hereinbelow.

When the air conditioner 1 is operated in a cooling operation mode (a first operation mode), the refrigerant may flow in a direction (A), shown in Fig. 1 as a solid arrow. In more detail, the refrigerant passing through the compressor 10 may pass through the flow converter 20 and be introduced into the outdoor heat-exchanger 30. Then, the refrigerant may be condensed while passing through the outdoor heat-exchanger 30. When the condensation of the refrigerant is completed, the refrigerant may be converted into an overcooled liquid state.

The refrigerant in the overcooled liquid state may be decompressed to a predetermined pressure while passing through the expander 100, and thus, a flow rate of the refrigerant may be controlled. That is, the flow rate of the refrigerant may be controlled according to structural characteristics of the expander 100, for example, an inner diameter or length of the expander 100.

The refrigerant passing through the expander 100 may be evaporated while passing through the indoor heat-exchanger 40. Then, the evaporated refrigerant may pass through the gas/liquid separator 50 via the flow converter 20, and the gaseous liquid, from which the liquid refrigerant is separated, may be introduced into the compressor 10. The refrigerant circulation process may be repeatedly performed.

On the other hand, when the air conditioner 1 is operated in a heating mode (a second operation mode), the refrigerant may flow in a direction (B), shown in Fig. 1 as a dotted arrow. In more detail, the refrigerant passing through the compressor 10 may pass through the flow converter 20 and be introduced into the indoor heat-exchanger 40. Then, the refrigerant may be condensed while passing through the indoor heat-exchanger 40. When the condensation of the refrigerant is completed, the refrigerant may be converted into an overcooled liquid state.

The refrigerant in the overcooled liquid state may be decompressed to a predetermined pressure while passing through the expander 100, and thus, a flow rate of the refrigerant may be controlled. Also, the refrigerant passing through the expander 100 may be evaporated while passing through the outdoor heat-exchanger 30, and the evaporated refrigerant may be introduced into the compressor 10 through the flow converter 20 and the gas/liquid separator 50. The refrigerant circulation process may be repeatedly performed.

As described above, when the cooling or heating operation is performed, the refrigerant circulating through the refrigeration cycle may be changed in flow direction. In more detail, when the cooling operation is performed, the refrigerant condensed in the outdoor heat-exchanger 30 may successively pass through the first capillary tube 110 and the second capillary tube 150 and may be introduced into the indoor heat exchanger 40. That is, the first capillary tube 110 may be disposed at an outlet side of the outdoor heat-exchanger 30, and the second capillary tube 150 may be disposed at an inlet side of the indoor heat-exchanger 40.

On the other hand, when the heating operation is performed, the refrigerant condensed in the indoor heat-exchanger 40 may successively pass through the second capillary tube 150 and the first capillary tube 110 and be introduced into the outdoor heat-exchanger 30. That is, the second capillary tube may be disposed at an outlet side of the indoor heat-exchanger 40, and the first capillary tube 110 may be disposed at the inlet side of the outdoor heat-exchanger 30.

When the first and the second capillary tubes 110 and 150 have inner diameters different from each other, a flow resistance of the refrigerant flowing into the first or second capillary tube 110 or 150 may be different. Thus, pressure drop or refrigerant flow rate may be different. More specifically, when an inner diameter of the capillary tube decreases, the pressure drop may increase and the refrigerant flow rate may decrease. Hereinafter, expander 100 will be described in detail with reference to the accompanying drawings.

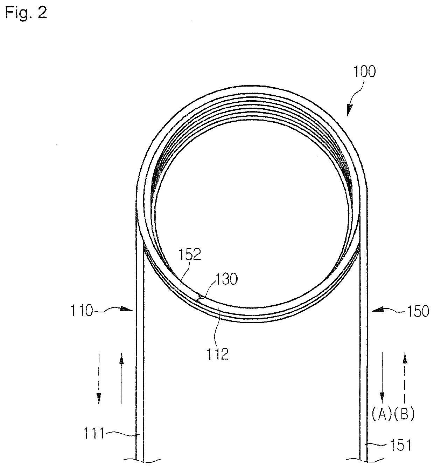

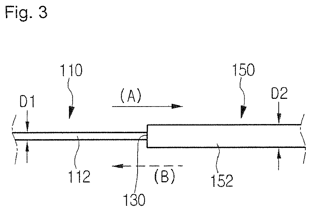

Fig. 2 is a perspective view of the expander Fig. 1. Fig. 3 is a side view of a portion of the expander of Fig. 2. Referring to Figs. 2 and 3, the expander 100 may include the plurality of capillary tubes 110 and 150, which may be connected to each other in series.

The plurality of capillary tubes 110 and 150 may include the first capillary tube 110, which may be connected to an outlet side of the outdoor heat-exchanger 30 during the cooling operation, and the second capillary tube 150, which may be connected to an outlet side of the indoor heat-exchanger 40 during the heating operation. Each of the first and second capillary tubes 110 and 150 may be wound in a coil shape, and may be coupled to each other.

The first capillary tube 110 may include a cooling refrigerant inflow portion 111, through which the refrigerant discharged from the outdoor heat-exchanger 30 may be introduced, and a first coupling portion 112 coupled to the second capillary tube 150. The cooling refrigerant inflow part 111 may be disposed on an end of one side of the first capillary tube 110, and the first coupling part 112 may be disposed on an end of the other side of the first capillary tube 110.

In the cooling operation mode, the refrigerant passing through the outdoor heat-exchanger 30 may be introduced into the expander 100 through the cooling refrigerant inflow portion 111. On the other hand, in the heating operation mode, the refrigerant passing through the second capillary tube 150 and the first capillary tube 110 may be discharged from the expander 100 through the cooling refrigerant inflow portion 111.

The second capillary tube 150 may include a heating refrigerant inflow portion 151, through which the refrigerant discharged from the indoor heat-exchanger 40 may be introduced, and a second coupling portion 152 coupled to the first capillary tube 150. The heating refrigerant inflow portion 151 may be disposed on an end of one side of the second capillary tube 150, and the second coupling part 152 may be disposed on an end of the other side of the second capillary tube 150.

In the heating operation mode, the refrigerant passing through the indoor heat-exchanger 40 may be introduced into the expander 100 through the heating refrigerant inflow portion 151. On the other hand, in the cooling operation mode, the refrigerant passing through the first and second capillary tubes 110 and 150 may be discharged from the expander through the heating refrigerant inflow portion 151.

The first coupling portion 112 may be connected to the second coupling portion 152. For example, an end of the first capillary tube 110 may be coupled to an end of the second capillary tube 150.

The expander 100 may include a connection portion 130 coupled to the first and second coupling portions 112 and 152. The first and second capillary tubes 110 and 150 may communicate with each other through the connection portion 130. That is, the refrigerant flowing into the first capillary tube 110 may be introduced into the second capillary tube 150 through the connection portion 130, and the refrigerant flowing into the second capillary tube 150 may be introduced into the first capillary tube 110 through the connection portion 130.

The first and second coupling portions 112 and 152 may be, for example, welded to each other or coupled to each other through a separate coupling member to manufacture the connection portion 130. Alternatively, the first coupling portion 112 may be inserted into the second coupling portion 152 to manufacture the connection portion 130. However, embodiments are not limited to such methods of manufacturing the connection portion 130.

The cooling refrigerant inflow portion 111 may be an inlet port, through which the refrigerant may be introduced into the expander 100 when the cooling operation is performed, and the heating refrigerant inflow portion 115 may be an inlet port, through which the refrigerant is introduced into the expander 100 when the heating operation is performed. On the other hand, the heating refrigerant inflow portion 115 may be an outlet port, through which the refrigerant may be discharged from the expander 110 when the cooling operation is performed, and the cooling refrigerant inflow part 111 may be an outlet port, through which the refrigerant may be discharged from the expander 110 when the heating operation is performed.

An inner diameter of the first capillary tube 110 may be referred to using reference symbol D1 (a first inner diameter), and an inner diameter of the second capillary tube 150 may be referred to using reference symbol D2 (a second inner diameter). The second inner diameter D2 may be greater than the first inner diameter D1.

When the air conditioner 1 performs the cooling operation, the first capillary tube 110 may be referred to as an "expander" that provides a flow resistance, so that the refrigerant in the overcooled liquid state is phase-changed into refrigerant having a liquid state. The second capillary tube 150 may be referred to as an "expander" that provides a flow resistance, so that the refrigerant in the liquid state is phase-changed into refrigerant having a two-phase state (i.e., a mixed state of liquid and gaseous refrigerants). In this case, the first capillary tube 110 may be the expander in which a single phase flow is performed, and the second capillary tube 150 may be the expander in which a two-phase flow (liquid phase and gaseous phase flow) is performed.

On the other hand, when the air conditioner 1 performs the heating operation, the second capillary tube 150 may be referred to as an "expander" that provides a flow resistance, so that the refrigerant in the overcooled liquid state is phase-changed into refrigerant in a liquid state. Also, the first capillary tube 110 may be referred to as an "expander" that provides a flow resistance, so that the refrigerant in the liquid state is phase-changed into refrigerant in the two-phase state (the mixed state of the liquid and gaseous refrigerants). In this case, the second capillary tube 150 may be the expander in which a single phase flow is performed, and the first capillary tube 110 may be the expander in which a two-phase flow (liquid phase and gaseous phase flow) is performed.

When the cooling operation is performed, the refrigerant may successively pass through the first and second capillary tubes 110 and 150 to form the single phase flow and the two-phase flow. During the single phase flow and the two-phase flow, a pressure drop due to friction may occur within the first and second capillary tube 110 and 150.

Further, when the refrigerant flows in the two-phase state, a pressure drop due to acceleration of the refrigerant, in addition to the pressure drop due to the friction within the capillary tube, may occur. Thus, when the refrigerant flows in the two-phase state, the pressure drop (flow resistance) effect may be significant when compared to that of the single phase flow. Also, when the pressure drop effect is significant, a mass flow rate within the capillary tube may be relatively low.

The more the inner diameter of each of the first and second capillary tubes 110 and 150 decreases, the more the flow resistance increases. Thus, a flow rate of the refrigerant may decrease.

When the inner diameter of the capillary tube in which the two-phase flow is performed decreases, the pressure drop effect of the refrigerant flowing into the expander 100 may increase. Thus, the flow rate of the refrigerant may decrease.

Referring to Figs. 2 and 3, in the cooling operation mode (see arrow (A)), the refrigerant may flow into the first capillary tube 110 in the single phase state and flow into the second capillary tube 150 having an inner diameter greater than that of the first capillary tube 110 in the two-phase state. In the heating operation mode (see arrow (B)), the refrigerant may flow into the second capillary tube 150 in the single phase state and flow into the first capillary tube 110 having an inner diameter less than that of the second capillary tube 150 in the two-phase state.

Thus, since a refrigerant decompression effect in the heating operation mode is greater than that in the cooling operation mode, the flow rate of the refrigerant flowing into the expander 100 during the heating operation may be less than the refrigerant flowing into the expander 100 during the cooling operation.

In summary, the plurality of capillary tubes 110 and 150 may be connected to each other in series, and the refrigerant may pass through the plurality of capillary tubes 110 and 150 during the cooling or heating operation. However, because the plurality of capillary tubes 110 and 150 have inner diameters different from each other, the cooling flow rate may be greater than the heating flow rate. In general, considering that the refrigerant flow rate required for the heating operation may be less than that required for the cooling operation, the refrigerant flow rate required for the system during the cooling and heating operation may be satisfied by the above-described configuration.

Hereinafter, a refrigerant decompression effect due to a length of the first or second capillary tube 110 or 150 will be described with reference to Table. 1.

**[Table 1]**

| Classification | First capillary tube (110) | Second capillary tube (15 0) |
|---|---|---|
| Length L of capillary tube | L1 | L2 |

In general, when the capillary tube increases in length, a decompression effect of the refrigerant passing through the inside of the capillary tube may increase. Thus, the more the length L1 of the first capillary tube 110 or the length L2 of the second capillary tube 150 increases, the more the refrigerant decompression performance may increase and the refrigerant flow rate may relatively decrease. The lengths L1 and L2 may be set to specific values according to the phase-change process of the refrigerant during the cooling or heating operation.

That is, the length L1 may be set so that the refrigerant flows into the first capillary tube 110 in the single phase state and then flows into the second capillary tube 150 in the two-phase state during the cooling operation. On the other hand, the length L2 may be set so that the refrigerant flows into the second capillary tube 150 in the single phase state and then flows into the first capillary tube 110 in the two-phase state during the heating operation.

The conversion between the single phase flow and the two-phase flow may be unclear at the connection part 130 of the first and second capillary tubes 110 and 150. However, it may be understood that the two-phase flow of the refrigerant may be larger within the first capillary tube 110 than the second capillary tube 150 during the cooling operation, and the two-phase flow of the refrigerant may be larger within the first capillary tube 110 than the second capillary tube 150 during the heating operation.

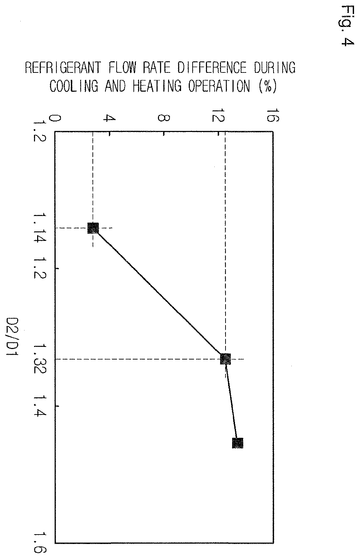

Fig. 4 is a graph illustrating a difference in a flow rate of a refrigerant in cooling and heating operations according to an embodiment. Hereinafter, a flow rate difference of the refrigerant during the cooling and heating operation according to an embodiment will be described with reference to Fig. 4.

Referring to Fig. 4, a horizontal-axis variable of the graph represents D2/D1 (an inner diameter of the second capillary tube to an inner diameter of the first capillary tube), and a vertical-axis variable represents a directional refrigerant flow rate difference (hereinafter, referred to as a "refrigerant flow rate difference").

Since D2 may be greater that D1, a valve of D2/D1 may exceed 1. Also, the more the value of D2/D1 increases, the more the refrigerant flow rate difference may increase. Also, the value of D2/D1 may be less than 5.

For example, when the D2/D1 is 1.14, the refrigerant flow rate difference may be about 3.2%. That is, the refrigerant flow rate in the cooling operation mode may be greater by about 3.2% than that in the heating operation mode. For example, when the refrigerant flow rate in the heating operation mode is about 100, the refrigerant flow rate in the cooling operation mode may be about 103.2.

Also, when D2/D1 is about 1.32, the refrigerant flow rate difference may be about 13%. As shown in Fig. 4, the plurality of capillary tubes may have inner diameters different from each other to secure a greater refrigerant flow rate in the cooling operation mode than in the heating operation mode.

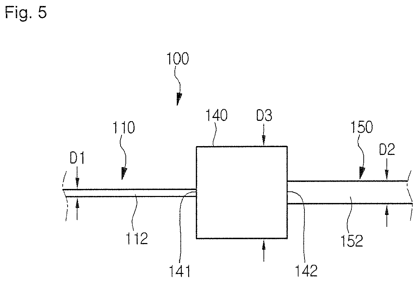

Hereinafter, another embodiment will be described with reference to Fig. 5. In describing this embodiment, like reference numerals have been used to indicate like elements, and repetitive description has been omitted.

Fig. 5 is a view illustrating a portion of an expander according to the invention. Referring to Fig. 5, an expander 100 according to the invention includes a first capillary tube 110 connected to an outlet side of an outdoor heat-exchanger 30, a second capillary tube 150 connected to an outlet side of an indoor heat-exchanger 40, and a connection member 140 disposed between the first capillary tube 110 and the second capillary tube 150.

The connection member 140 may be a tank, in which refrigerant may be temporarily received while flowing into the expander 100. The connection member 140 may connect the first capillary tube 110 to the second capillary tube 150.

The connection member 140 may include a first connection portion 141 connected to the first capillary tube 110 and a second connection portion 142 connected to the second capillary tube 150. The first connection portion 141 may be disposed at one side of the connection member 140, and the second connection portion 142 may be disposed at an other side of the connection member 140. The refrigerant within the first and second capillary tubes 110 and 150 may flow into the connection member 140 through the first and second connection portions 141 and 142.

An inner diameter D3 of the connection member 140 is greater than each of an inner diameter D1 of the first capillary tube 110 and an inner diameter D2 of the second capillary tube 150. That is, a refrigerant flow sectional area of the connection member 140 is greater than that of each of the first and second capillary tubes 110 and 150.

Because the connection member 140 has an inner diameter or sectional area greater than that of each of the first and second capillary tubes 110 and 150, a decompression effect while the refrigerant flows into the connection member 140 may not be large. Thus, when the refrigerant is directly introduced from the first capillary tube 110 into the second capillary tube 150 or from the second capillary tube 150 into the first capillary tube 150 like the foregoing embodiment, refrigerant decompression and refrigerant flow rate adjustment effects when the refrigerant is introduced through the connection member 140 may be similar to those of the foregoing embodiment.

In the cooling operation mode, the refrigerant may flow into the connection member 140 or the second capillary tube 150 in a two-phase state. Also, in the heating operation mode, the refrigerant may flow into the connection member 140 or the first capillary tube 110 in the two-phase state.

Also, as shown in the embodiments disclosed herein, a refrigerant flow rate in the cooling operation mode may be greater than that in the heating operation mode. Thus, the refrigerant flow rate required for the cooling or heating operation mode of the system may be satisfied.

According to embodiments disclosed herein, the flow rate of the refrigerant flowing according to the operation direction of the air conditioner may be adequately controlled to improve the cooling or heating performance.

Also, the refrigerant passing through the condenser when the cooling operation is performed may flow into the capillary tube having a relatively small inner diameter in the single phase state and flow into the capillary tube having a relatively large inner diameter in the two-phase state. Thus, the flow resistance may be reduced to secure the high refrigerant flow rate.

On the other hand, the refrigerant passing through the condenser when the heating operation is performed may flow into the capillary tube having a relatively large inner diameter in the single phase state and flow into the capillary tube having a relatively small inner diameter in the two-phase state. Thus, the flow resistance may relatively increase to reduce the refrigerant flow rate.

Also, since the refrigerant may adequately flow according to the operation modes, that is, the cooling mode or the heating mode, the refrigeration cycle may be economically performed.

Also, since the plurality of capillary tubs may be connected to each other in series to constitute the expander, the system may be simplified in structure and inexpensive in manufacturing costs.

According to embodiments disclosed herein, the flow rate of the refrigerant flowing according to the operation direction of the air conditioner may be adequately controlled to improve the cooling or heating performance. Thus, industrial applicability may be significantly improved.

Embodiments disclosed herein provide an air conditioner in which a plurality of expanders are disposed in series.

Embodiments disclosed herein provide an air conditioner that may include a compressor that compresses a refrigerant; an outdoor that heat-exchanges heat-exchanging with the refrigerant discharged from the compressor according to a first operation mode; an indoor heat-exchanger that heat-exchanges with the refrigerant discharged from the compressor according to a second operation mode; and an expander that decompresses the refrigerant passing through the outdoor heat-exchanger or the indoor heat-exchanger. The expander may include a first decompression part or portion disposed at an outlet side or an inlet side of the outdoor heat-exchanger, the first decompression part or portion having a first inner diameter, and a second decompression part or portion connected to the first decompression part in series, the second decompression part or portion having a second inner diameter greater than the first inner diameter.

Embodiments disclosed herein further provide an air conditioner that may include a compressor that compresses a refrigerant; an outdoor heat-exchanger disposed in an outdoor space that condenses the refrigerant passing through the compressor in a cooling operation process; an indoor heat-exchanger disposed in an indoor space to condense the refrigerant passing through the compressor in a heating operation process; and a plurality of capillary tubes that expand the refrigerant introduced through the indoor heat-exchanger or the outdoor heat-exchanger, the plurality of capillary tubes being connected to each other in series. In the cooling or heating operation process, the refrigerant passes through the plurality of capillary tubes.

Embodiments disclosed herein additionally provide an air conditioner having a refrigeration cycle constituted by sequentially connecting a compressor, an outdoor heat-exchanger, an expander, and an indoor heat-exchanger to each other that may include a flow conversion part or converter that guides a refrigerant discharged from the compressor into the outdoor heat-exchanger or the indoor heat-exchanger. The expander may include a first capillary tube disposed between the outdoor heat-exchanger and the indoor heat-exchanger, the first capillary tube having a first inner diameter, and a second capillary tube coupled to an end of one side of the first capillary tube, the second capillary tube having a second inner diameter greater than the first inner diameter.

Although embodiments have been described with reference to a number of illustrative embodiments thereof, it should be understood that numerous other modifications and embodiments can be devised by those skilled in the art that will fall within the scope of the claims. More particularly, various variations and modifications are possible in the component parts and/or arrangements of the subject combination arrangement within the scope of the appended claims.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the claims. More particularly, various variations and modifications are possible in the component parts and/or arrangements of the subject combination arrangement within the scope of the appended claims.

## Claims

1. An air conditioner, comprising:
a compressor (10) for compressing a refrigerant;
an outdoor heat-exchanger (30) for heat-exchanging with the refrigerant discharged from the compressor according to a first operation mode;
an indoor heat-exchanger (40) for heat-exchanging with the refrigerant discharged from the compressor (10) according to a second operation mode; and
an expander (100) for decompressing the refrigerant having passed through the outdoor heat-exchanger (30) or the indoor heat-exchanger (40), wherein the expander (100) comprises:
a first capillary tube (110) disposed at an outlet side or an inlet side of the outdoor heat-exchanger (30), the first capillary tube (110) having a first inner diameter (D1);
a second capillary tube (150) connected to the first capillary tube (110) in series, the second capillary tube (150) having a second inner diameter (D2) greater than the first inner diameter (D1); and **characterised in that** a connection member (140) disposed between the first capillary tube (110) and the second capillary tube (150) to receive the refrigerant flowing into the expander (100), the connection member (140) having a third inner diameter (D3) greater than the second inner diameter (D2).

2. The air conditioner according to claim 1, wherein, in the first operation mode, the refrigerant is introduced into the second capillary tube (150) through the first capillary tube (110).

3. The air conditioner according to claim 1 or 2, wherein, in the second operation mode, the refrigerant is introduced into the first capillary tube (110) through the second capillary tube (150).

4. The air conditioner according to any one of claims 1 to 3, wherein, in the first operation mode, the first capillary tube (110) is disposed at the outlet side of the outdoor heat-exchanger (30), and the second capillary tube (150) is disposed at an inlet side of the indoor heat-exchanger (40).

5. The air conditioner according to any one of claims 1 to 4, wherein, in the second operation mode, the first capillary tube (110) is disposed at the inlet side of the outdoor heat-exchanger (30), and the second capillary tube (150) is disposed at an outlet side of the indoor heat-exchanger (40).

6. The air conditioner according to any one of claims 1 to 5, wherein the first capillary tube (110) comprises:
a cooling refrigerant inflow portion (111), through which the refrigerant discharged from the outdoor heat-exchanger (30) is adapted to be introduced, or refrigerant having passed through the second capillary tube (150) is adapted to be discharged; and
a first coupling portion (112) coupled to the second capillary tube (150).

7. The air conditioner according to any one of claims 1 to 6, wherein the second capillary tube (150) comprises:
a heating refrigerant inflow portion (151), through which the refrigerant discharged from the indoor heat-exchanger (40) is introduced, or refrigerant having passed through the first capillary tube (110) is discharged; and
a second coupling portion (152) coupled to the first capillary tube (110).

8. The air conditioner according to any one of claims 1 to 7, wherein an end of the first capillary tube (110) is coupled to an end of the second capillary tube (150).

9. The air conditioner according to any one of claims 1 to 8, wherein the connection member (140) comprises a tank that connects the first capillary tube (110) to the second capillary tube (150).

10. The air conditioner according to any one of claims 1 to 9, wherein the first operation mode is a cooling operation mode, and the second operation mode is a heating operation mode.

11. The air conditioner according to any one of claims 1 to 10, wherein a ratio of the second inner diameter (D2) to the first inner diameter (D1) is greater than about 1 and less than about 5.

12. A method of operating an air conditioner, the method comprising the steps of:
compressing a refrigerant by a compressor (10);
operating an outdoor heat-exchanger (30) according to a first operation mode to heat-exchange with the refrigerant discharged from the compressor (10);
operating an indoor heat-exchanger (40) according to a second operation mode to heat-exchange with the refrigerant discharged from the compressor (10); and
decompressing the refrigerant having passed through the outdoor heat-exchanger (30) or the indoor heat-exchanger (40) by an expander (100), wherein the expander (100) comprises:
a first capillary tube (110) disposed at an outlet side or an inlet side of the outdoor heat-exchanger (30), the first capillary tube (110) having a first inner diameter (D1);
a second capillary tube (150) connected to the first capillary tube (110) in series, the second capillary tube (150) having a second inner diameter (D2) greater than the first inner diameter (D1); and
a connection member (140) disposed between the first capillary tube (110) and the second capillary tube (150) to receive the refrigerant flowing into the expander (100), the connection member (140) having a third inner diameter (D3) greater than the second inner diameter (D2).

13. The method of claim 12, wherein the first operation mode is a cooling operation mode, and the second operation mode is a heating operation mode.

## Patentansprüche

1. Klimaanlage, mit:
einem Verdichter (10) zum Verdichten eines Kältemittels;
einem Außenwärmetauscher (30) zum Wärmeaustausch mit dem aus dem Verdichter ausgestoßenen Kältemittel gemäß einer ersten Betriebsart;
einem Innenwärmetauscher (40) zum Wärmeaustausch mit dem aus dem Verdichter (10) ausgestoßenen Kältemittel gemäß einer zweiten Betriebsart; und
einer Ausdehnungseinrichtung (100) zum Entspannen des Kältemittels, das durch den Außenwärmetauscher (30) oder den Innenwärmetauscher (40) gegangen ist, wobei die Ausdehnungseinrichtung (100) aufweist:
eine erste Kapillarröhre (110), die an einer Auslassseite oder einer Einlassseite des Außenwärmetauschers (30) angeordnet ist, wobei die erste Kapillarröhre (110) einen ersten Innendurchmesser (D1) aufweist;
eine zweite Kapillarröhre (150), die mit der ersten Kapillarröhre (110) in Reihe geschaltet ist, wobei die zweite Kapillarröhre (150) einen zweiten Innendurchmesser (D2) aufweist, der größer als der erste Innendurchmesser (D1) ist; und die **gekennzeichnet ist durch** ein Verbindungselement (140), das zwischen der ersten Kapillarröhre (110) und der zweiten Kapillarröhre (150) angeordnet ist, um das Kältemittel aufzunehmen, das die Ausdehnungseinrichtung (100) fließt, wobei das Verbindungselement (140) einem dritten Innendurchmesser (D3) aufweist, der größer als der zweite Innendurchmesser (D2) ist.

2. Klimaanlage nach Anspruch 1, wobei in der ersten Betriebsart das Kältemittel durch die erste Kapillarröhre (110) in die zweite Kapillarröhre (150) eingeleitet wird.

3. Klimaanlage nach Anspruch 1 oder 2, wobei in der zweiten Betriebsart das Kältemittel durch die zweite Kapillarröhre (150) in die erste Kapillarröhre (110) eingeleitet wird.

4. Klimaanlage nach einem der Ansprüche 1 bis 3, wobei in der ersten Betriebsart die erste Kapillarröhre (110) an der Auslassseite des Außenwärmetauschers (30) angeordnet ist, und die zweite Kapillarröhre (150) an einer Einlassseite des Innenwärmetauschers (40) angeordnet ist.

5. Klimaanlage nach einem der Ansprüche 1 bis 4, wobei in der zweiten Betriebsart die erste Kapillarröhre (110) an der Einlassseite des Außenwärmetauschers (30) angeordnet ist, und die zweite Kapillarröhre (150) an einer Auslassseite des Innenwärmetauschers (40) angeordnet ist.

6. Klimaanlage nach einem der Ansprüche 1 bis 5, wobei die erste Kapillarröhre (110) aufweist:
einen Zuflussabschnitt (111) für kühlendes Kältemittel, durch den das aus dem Außenwärmetauscher (30) ausgestoßene Kältemittel einleitbar ist, oder Kältemittel, das durch die zweite Kapillarröhre (150) gegangen ist, ausstoßbar ist; und
einen ersten Kopplungsabschnitt (112), der mit der zweiten Kapillarröhre (150) gekoppelt ist.

7. Klimaanlage nach einem der Ansprüche 1 bis 6, wobei die zweite Kapillarröhre (150) aufweist:
einen Zuflussabschnitt (151) für heizendes Kältemittel, durch den das aus dem Innenwärmetauscher (40) ausgestoßene Kältemittel eingeleitet wird, oder Kältemittel, das durch die erste Kapillarröhre (110) gegangen ist, ausgestoßen wird; und
einen zweiten Kopplungsabschnitt (152), der mit der ersten Kapillarröhre (110) gekoppelt ist.

8. Klimaanlage nach einem der Ansprüche 1 bis 7, wobei ein Ende der ersten Kapillarröhre (110) mit einem Ende der zweiten Kapillarröhre (150) gekoppelt ist.

9. Klimaanlage nach einem der Ansprüche 1 bis 8, wobei das Verbindungselement (140) einen Tank aufweist, der die erste Kapillarröhre (110) mit der zweiten Kapillarröhre (150) verbindet.

10. Klimaanlage nach einem der Ansprüche 1 bis 9, wobei die erste Betriebsart eine Kühlbetriebsart ist, und die zweite Betriebsart eine Heizbetriebsart ist.

11. Klimaanlage nach einem der Ansprüche 1 bis 10, wobei ein Verhältnis des zweiten Innendurchmessers (D2) zum ersten Innendurchmesser (D1) größer als etwa 1 und kleiner als etwa 5 ist.

12. Verfahren zum Betreiben einer Klimaanlage, wobei das Verfahren die Schritte aufweist:
Verdichten eines Kältemittels durch einen Verdichter (10);
Betreiben eines Außenwärmetauschers (30) gemäß einer ersten Betriebsart, um einen Wärmeaustausch mit dem aus dem Verdichter (10) ausgestoßenen Kältemittel durchzuführen;
Betreiben eines Innenwärmetauscher (40) gemäß einer zweiten Betriebsart, um einen Wärmeaustausch mit dem aus dem Verdichter (10) ausgestoßenen Kältemittel durchzuführen; und
Entspannen des Kältemittels, das durch den Außenwärmetauscher (30) oder den Innenwärmetauscher (40) gegangen ist, durch eine Ausdehnungseinrichtung (100), wobei die Ausdehnungseinrichtung (100) aufweist:
eine erste Kapillarröhre (110), die an einer Auslassseite oder einer Einlassseite des Außenwärmetauschers (30) angeordnet ist, wobei die erste Kapillarröhre (110) einen ersten Innendurchmesser (D1) aufweist;
eine zweite Kapillarröhre (150), die mit der ersten Kapillarröhre (110) in Reihe geschaltet ist, wobei die zweite Kapillarröhre (150) einen zweiten Innendurchmesser (D2) aufweist, der größer als der erste Innendurchmesser (D1) ist; und
ein Verbindungselement (140), das zwischen der ersten Kapillarröhre (110) und der zweiten Kapillarröhre (150) angeordnet ist, um das Kältemittel aufzunehmen, das in die Ausdehnungseinrichtung (100) fließt, wobei das Verbindungselement (140) einen dritten Innendurchmesser (D3) aufweist, der größer als der zweite Innendurchmesser (D2) ist.

13. Verfahren nach Anspruch 12, wobei die erste Betriebsart eine Kühlbetriebsart ist, und die zweite Betriebsart eine Heizbetriebsart ist.

## Revendications

1. Climatiseur, comprenant :
un compresseur (10) destiné à compresser un réfrigérant ;
un échangeur de chaleur extérieur (30) destiné à échanger de la chaleur avec le réfrigérant évacué du compresseur dans un premier mode de service ;
un échangeur de chaleur intérieur (40) destiné à échanger de la chaleur avec le réfrigérant évacué du compresseur (10) dans un deuxième mode de service ; et
un détendeur (100) destiné à détendre le réfrigérant ayant traversé l'échangeur de chaleur extérieur (30) ou l'échangeur de chaleur intérieur (40), ledit détendeur (100) comprenant :
un premier tube capillaire (110) disposé côté sortie ou côté entrée de l'échangeur de chaleur extérieur (30), ledit premier tube capillaire (110) présentant un premier diamètre intérieur (D1) ;
un deuxième tube capillaire (150) raccordé en série au premier tube capillaire (110), ledit deuxième tube capillaire (150) présentant un deuxième diamètre intérieur (D2) supérieur au premier diamètre intérieur (D1) ; **caractérisé par**
un élément de connexion (140) disposé entre le premier tube capillaire (110) et le deuxième tube capillaire (150) pour recevoir le réfrigérant s'écoulant dans le détendeur (100), ledit élément de connexion (140) présentant un troisième diamètre intérieur (D3) supérieur au deuxième diamètre intérieur (D2).

2. Climatiseur selon la revendication 1, où, dans le premier mode de service, le réfrigérant est introduit dans le deuxième tube capillaire (150) par le premier tube capillaire (110).

3. Climatiseur selon la revendication 1 ou la revendication 2, où, dans le deuxième mode de service, le réfrigérant est introduit dans le premier tube capillaire (110) par le deuxième tube capillaire (150).

4. Climatiseur selon l'une des revendications 1 à 3, où, dans le premier mode de service, le premier tube capillaire (110) est disposé côté sortie de l'échangeur de chaleur extérieur (30), et le deuxième tube capillaire (150) est disposé côté entrée de l'échangeur de chaleur intérieur (40).

5. Climatiseur selon l'une des revendications 1 à 4, où, dans le deuxième mode de service, le premier tube capillaire (110) est disposé côté entrée de l'échangeur de chaleur extérieur (30), et le deuxième tube capillaire (150) est disposé côté sortie de l'échangeur de chaleur intérieur (40).

6. Climatiseur selon l'une des revendications 1 à 5, où le premier tube capillaire (110) comprend :
une section d'admission (111) de refroidissement de réfrigérant par laquelle est préparée l'introduction du réfrigérant évacué de l'échangeur de chaleur extérieur (30), le réfrigérant ayant traversé le deuxième tube capillaire (150) étant préparé à être évacué ; et
une première section de liaison (112) raccordée au deuxième tube capillaire (150).

7. Climatiseur selon l'une des revendications 1 à 6, où le deuxième tube capillaire (150) comprend :
une section d'admission (151) de chauffage de réfrigérant par laquelle est introduit le réfrigérant évacué de l'échangeur de chaleur intérieur (40), ou où le réfrigérant ayant traversé le premier tube capillaire (110) est évacué ; et une deuxième section de liaison (152) raccordée au premier tube capillaire (110).

8. Climatiseur selon l'une des revendications 1 à 7, où une extrémité du premier tube capillaire (110) est raccordée à une extrémité du deuxième tube capillaire (150).

9. Climatiseur selon l'une des revendications 1 à 8, où l'élément de connexion (140) comprend un réservoir reliant le premier tube capillaire (110) au deuxième tube capillaire (150).

10. Climatiseur selon l'une des revendications 1 à 9, où le premier mode de service est un mode de service de refroidissement, et le deuxième mode de service un mode de service de chauffage.

11. Climatiseur selon l'une des revendications 1 à 10, où le rapport entre le deuxième diamètre intérieur (D2) et le premier diamètre intérieur (D1) est supérieur à 1 et inférieur à 5.

12. Procédé de fonctionnement d'un climatiseur, ledit procédé comprenant les étapes suivantes :
compression d'un réfrigérant par un compresseur (10) ;
mise en service d'un échangeur de chaleur extérieur (30) dans un premier mode de service pour échanger de la chaleur avec le réfrigérant évacué du compresseur (10) ;
mise en service d'un échangeur de chaleur intérieur (40) dans un deuxième mode de service pour échanger de la chaleur avec le réfrigérant évacué du compresseur (10) ; et
détente du réfrigérant ayant traversé l'échangeur de chaleur extérieur (30) ou l'échangeur de chaleur intérieur (40) par un détendeur (100), ledit détendeur (100) comprenant :
un premier tube capillaire (110) disposé côté sortie ou côté entrée de l'échangeur de chaleur extérieur (30), ledit premier tube capillaire (110) présentant un premier diamètre intérieur (D1) ;
un deuxième tube capillaire (150) raccordé en série au premier tube capillaire (110), ledit deuxième tube capillaire (150) présentant un deuxième diamètre intérieur (D2) supérieur au premier diamètre intérieur (D1) ; et
un élément de connexion (140) disposé entre le premier tube capillaire (110) et le deuxième tube capillaire (150) pour recevoir le réfrigérant s'écoulant dans le détendeur (100), ledit élément de connexion (140) présentant un troisième diamètre intérieur (D3) supérieur au deuxième diamètre intérieur (D2).

13. Procédé selon la revendication 12, où le premier mode de service est un mode de service de refroidissement, et le deuxième mode de service est un mode de service de chauffage.
